# EUROPEAN PATENT APPLICATION

(11) **EP 2 838 134 A1**
(43) Date of publication of application: **18.02.2015**
(21) Application number: 12874003.2
(22) Date of filing: 10.12.2012
(51) Int. Cl.: H01M 2/10, H01M 2/20, H01M 10/50

(54) **BATTERY, BATTERY PACK, AND VEHICLE**

(30) Priority: 13.04.2012 JP 2012092452
(71) Applicant: TOYOTA JIDOSHA KABUSHIKI KAISHA, Toyota-shi, Aichi-ken, 471-8571 (JP); KOJIMA PRESS INDUSTRY CO., LTD., Aichi 471-8588 (JP)
(72) Inventor: WATANABE, Hirotaka, Aichi-ken, 471-8571 (JP); IMAI, Masahiro, Aichi 471-8588 (JP); HAYASHI, Tuyoshi, Aichi-ken, 471-8571 (JP); KIMURA, Kenji, Aichi-ken, 471-8571 (JP); MURAYAMA, Ryogo, Aichi 471-8588 (JP); OSAKABE, Tomotaka, Aichi 471-8588 (JP)
(74) Representative: Kuhnen & Wacker
(86) International application number: PCT/JP2012/007880
(87) International publication number: WO 2013/153588

(57) **Abstract**

[PROBLEM] To prevent displacement of a power-generating portion in a case while avoiding an increased size of a battery.

[SOLVING MEANS] A battery includes a power-generating portion provided by covering cells with an insulating external material, and a case having a hermetically sealing structure to house the power-generating portion, wherein the case has an internal pressure higher than an external pressure. The power-generating portion may be a battery module provided by covering a group of batteries with the external material, the group of batteries including the arranged cells. The battery module may be housed in the case such that the battery module is folded at an area where a conductive member connecting adjacent ones of the cells is located. A coolant passage may be provided in which a coolant is passed along a face of the case closest to the conductive member.

## Description

### TECHNICAL FIELD

The present invention relates to a structure of a battery in which a power-generating portion is housed in a case.

### BACKGROUND ART

A battery having a power-generating portion housed in a case is known. Patent Document 1 has disclosed a battery in which a power-generating portion of sheet form is wound around an axis to provide a winding of flat shape and both end portions of the winding are hung in a case. The hanging of the winding in the case locates the winding at a predetermined position in the case.

### PRIOR ART DOCUMENTS

### PATENT DOCUMENTS

[Patent Document 1] Japanese Patent Laid-Open No. 2011-71109
[Patent Document 2] Japanese Patent Laid-Open No. 2011-249250
[Patent Document 3] Japanese Patent Laid-Open No. 2011-222230

### DISCLOSURE OF THE INVENTION

### PROBLEMS TO BE SOLVED BY THE INVENTION

The configuration described above, however, requires a support member for hanging the winding to result in a large size of the battery.

It is thus an object of the present invention to prevent displacement of a power-generating portion in a case while avoiding an increased size of a battery.

### MEANS FOR SOLVING THE PROBLEMS

To solve the problem described above, the present invention provides (1) a battery including a power-generating portion provided by covering cells with an insulating external material, and a case having a hermetically sealing structure to house the power-generating portion, wherein the case has an internal pressure higher than an external pressure.

(2) In the configuration of (1), the power-generating portion is a battery module provided by covering a group of batteries with the external material, the group of batteries including the arranged cells, and the battery module can be housed in the case such that the battery module is folded at an area where a conductive member connecting adjacent ones of the cells is located. According to the configuration of (2), displacement of the cell in the case can be prevented more effectively while avoiding an increased size of the battery.

(3) In the configuration of (2), a coolant passage can be provided in which a coolant is passed along a face of the case closest to the conductive member. According to the configuration of (3), cooling of the battery can be performed efficiently by cooling the area close to the position of the battery module where the temperature tends to be higher during charge and discharge.

(4) In the configuration of (2) or (3), the case includes first side faces opposite to each other in a first direction, second side faces opposite to each other in a second direction orthogonal to the first direction, a bottom face, and a top face, a pair of extraction electrodes used to extract a power of the battery module to the outside of the case is provided closer to the top face, the number of the cells included in the group of batteries is an even number, and the group of batteries includes a first cell and a second cell, an end portion of the first cell closer to the top face being connected to one of the pair of extraction electrodes through a first connecting member, an end portion of the first cell closer to the bottom face being connected to the conductive member, an end portion of the second cell closer to the top face being connected to the other of the pair of extraction electrodes through a second connecting member, an end portion of the second cell closer to the bottom face being connected to the conductive member. According to the configuration of (4), the connecting members for connecting the group of batteries to the extraction electrodes can be reduced in length. This can reduce the cost.

(5) In the configuration of (4), the group of batteries further includes a third cell connected to the first cell through the conductive member and a fourth cell connected to the third cell through the conductive member, the first connecting member is connected to one of a positive electrode and a negative electrode of the first cell, and the conductive member is exposed to the outside of the external material. The buttery further includes a first voltage detecting portion connected to the other of the electrodes of the first cell, and a second voltage detecting portion connected to the exposed portion of the conductive member connecting the third cell and the fourth cell. According to the configuration of (5), the voltage of each of the first and third cells can be detected without providing any voltage detecting portion for the connecting member connecting the first cell to the third cell. This can reduce the cost.

(6) In the configuration of (5), the first voltage detecting portion can be connected to the end portion of the first cell closer to the top face.

(7) An assembled battery including the batteries according to any one of (4) to (6), wherein the pair of extraction electrodes for the cells are arranged along the first direction.

(8) The battery according to any one of (1) to (6) can be mounted on a vehicle. In this case, a motor for running the vehicle is driven with a power supplied from the battery.

(9) The assembled battery according to (7) can be mounted on a vehicle. In this case, a motor for running the vehicle is driven with a power supplied from the assembled battery.

### ADVANTAGE OF THE INVENTION

The present invention achieves the object of preventing displacement of the power-generating element in the case while avoiding an increased size of the battery.

### BRIEF DESCRIPTION OF THE DRAWINGS

[Fig. 1] A developed view of a battery module.
[Fig. 2] A section view of the battery module in Fig. 1 taken along a section X-X'.
[Fig. 3] A perspective view of a battery in which the battery module is housed.
[Fig. 4] A section view of the battery in Fig. 3 taken along a section T-T'.
[Fig. 5] A diagram for explaining the operation of a processing apparatus for producing cooling fins.
[Fig. 6] A perspective view of an assembled battery.
[Fig. 7] A section view of a battery module according to Embodiment 2.

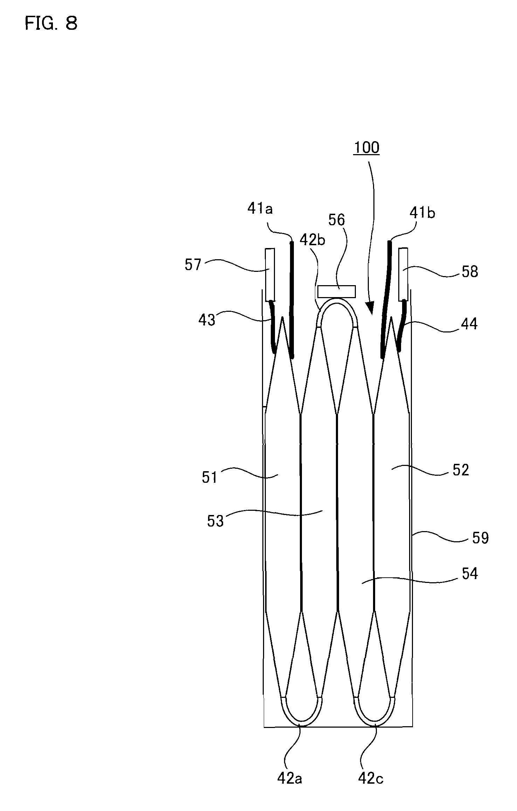

[Fig. 8] A section view of a battery according to Embodiment 2.
[Fig. 9] An assembly drawing of an assembled battery of Modification 3.
[Fig. 10] A schematic diagram showing a modification of a battery case.
[Fig. 11] A schematic diagram showing another modification of the battery case.

### MODE FOR CARRYING OUT THE INVENTION

### EMBODIMENT 1

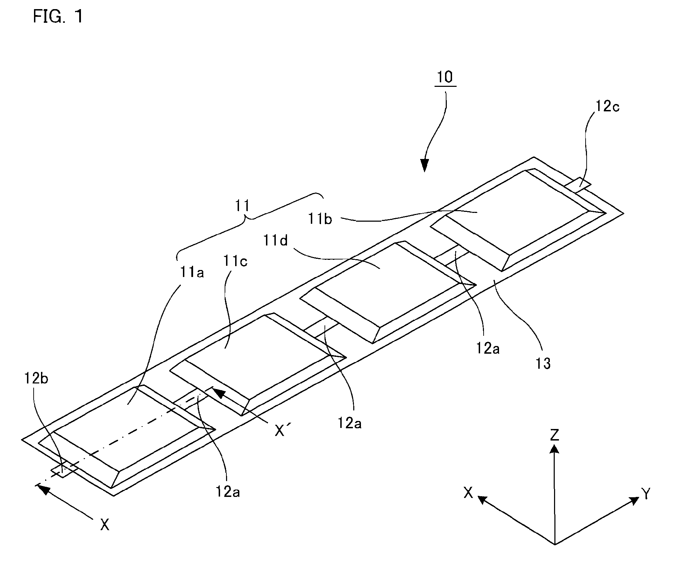

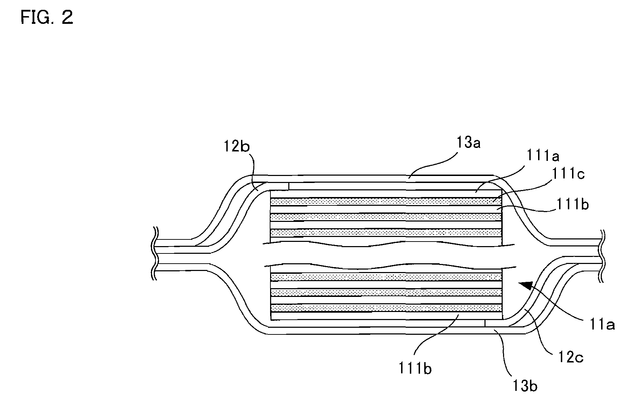

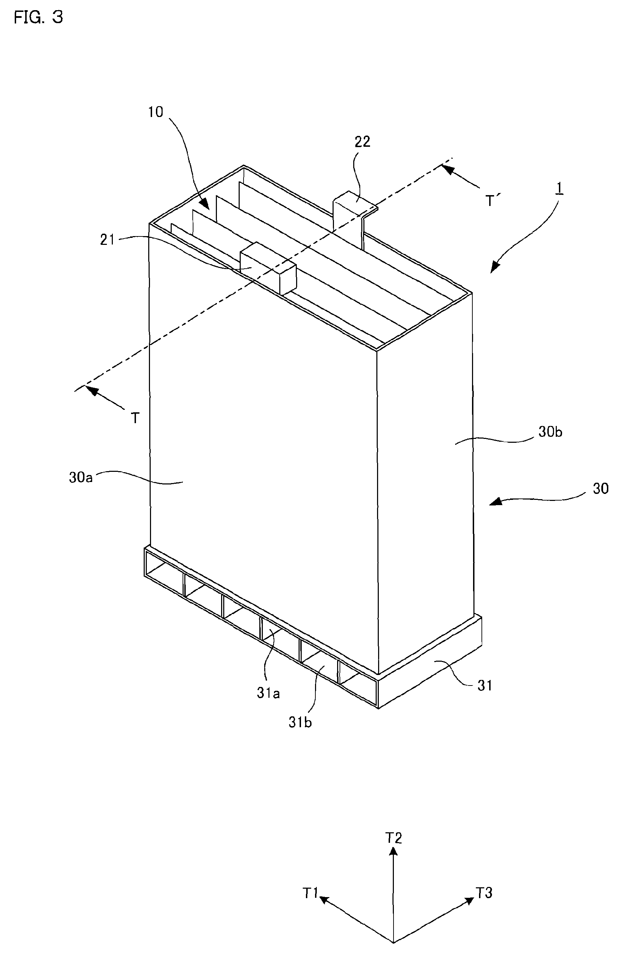

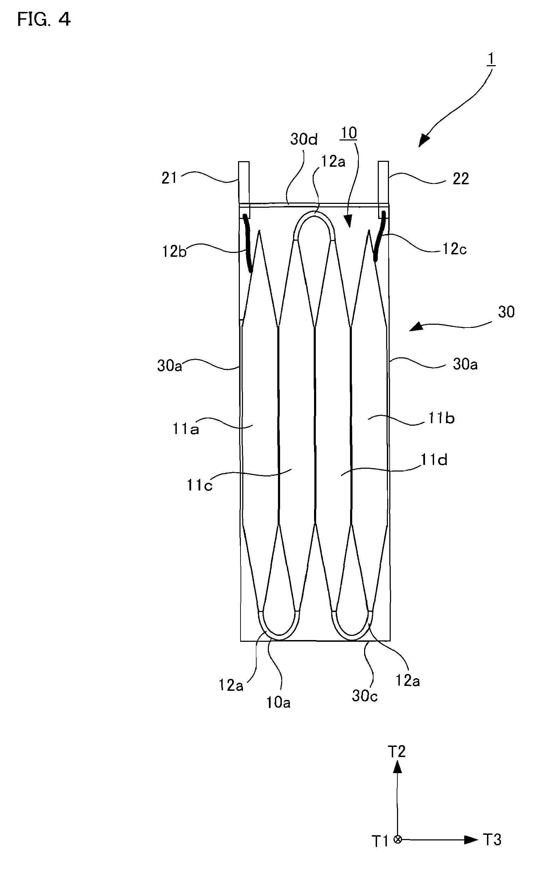

Referring to the drawings, Embodiment 1 of the present invention will be described. Fig. 1 is a developed view of a battery module (corresponding to a power-generating portion). An X axis, a Y axis, and a Z axis are three axes orthogonal to each other. The X axis represents a direction orthogonal to a longitudinal direction of the battery module, the Y axis represents the longitudinal direction of the battery module, and the Z axis represents a thickness direction of the battery module. Fig. 2 is a section view of the battery module taken along a section X-X' in Fig. 1. Fig. 3 is an external perspective view of a battery in which the battery module is incorporated. A T1 axis, a T2 axis, and a T3 axis are three axes orthogonal to each other. Fig. 4 is a section view of the battery shown in Fig. 3 taken along a section T-T'.

Referring to Fig. 1, a battery module 10 includes a group of batteries 11, inter-cell connecting tabs (corresponding to a conductive member) 12a, a positive electrode terminal connecting tab 12b (corresponding to a first connecting member), a negative electrode terminal connecting tab 12c (corresponding to a second connecting member), and an exterior material 13. The group of batteries 11 includes a first cell 11a, a second cell 11b, a third cell 11c, and a fourth cell 11d. The first to fourth cells 11a to 11d are arranged along the Y direction corresponding to the longitudinal direction of the exterior material 13. However, the number of the cells 11 may be from one to three, or five or more. The first cell 11a is located at one end in the Y axis direction, and the second cell 11b is located at the other end in the Y axis direction.

The exterior material 13 is formed of film members 13a and 13b. The film members 13a and 13b hold the first to fourth cells 11a to 11d between them and are thermally fused to each other at outer edge areas. The thermal fusion of the film members 13a and 13b hermetically seals in the first to fourth cells 11a to 11d inside the exterior material 13. The inter-cell connecting tab 12a may be exposed to the outside of the exterior material 13.

The film members 13a and 13b may be provided by using a flexible sheet having insulation properties. The film members 13a and 13b may be formed of a laminated film. The exterior material 13 having the insulation properties allows the first to fourth cells 11a to 11d to be unitized into the single battery module.

Referring to Fig. 2, the first cell 11a includes a positive electrode component 111a, a negative electrode component 111b, and a separator 111c. The positive electrode component 111a and the negative electrode component 111b are stacked with the separator 111c interposed between them. In the following description, the direction in which the positive electrode component 111a, the negative electrode component 111b, and the separator 111c are stacked may be referred to as a stack direction. Each of the first to fourth cells 11a to 11d may be a secondary battery such as a nickel metal hydride battery or a lithium-ion battery, or a capacitor. In Fig. 2, the positive electrode component 111a, the negative electrode component 111b, and the separator 111c are partially omitted.

The positive electrode component 111a includes a collector and a positive electrode layer formed on a surface of the collector. The positive electrode layer includes a positive electrode active material layer, a conductive agent and the like. The positive electrode active material may be a Li-Co composite oxide such as LiCoO₂, a Li-Ni composite oxide such as LiNiO₂, a Li-Mn composite oxide such as spinel LiMn₂O₄, and a Li-Fe composite oxide such as LiFeO₂. The positive electrode active material may be a phosphate compound of a transition metal and lithium such as LiFePO₄ or a sulfated compound, a transition metal oxide or sulfide such as V₂O₅, MnO₂, TiS₂, MoS₂, and MoO₃, or PbO₂, AgO, NiOOH.

The negative electrode component 111b includes a collector and a negative electrode layer formed on a surface of the collector. The negative electrode layer includes the negative electrode active material layer, a conductive agent and the like. The negative electrode active material may be a metal oxide, a lithium-metal composite oxide, and carbon.

The positive electrode terminal connecting tab 12b is connected to one end of the first cell 11a in the stack direction. The positive electrode terminal connecting tab 12b is connected to a general positive terminal 21 (corresponding to an extraction electrode) of a battery 1. The connection between the positive electrode terminal connecting tab 12b and the general positive terminal 21 may be made through ultrasonic welding or spot welding.

The negative electrode terminal connecting tab 12c is connected to one end of the second cell 11b in the stack direction. The negative electrode terminal connecting tab 12c is connected to a general negative terminal 22 (corresponding to an extraction electrode) of the battery 1. The connection between the negative electrode terminal connecting tab 12c and the general negative terminal 22 may be made through ultrasonic welding or spot welding.

The separator 111c contains an electrolyte. The electrolyte may be a solid electrolyte or an electrolytic solution. The solid electrolyte may be provided by using a polymer solid electrolyte or an inorganic solid electrolyte. Examples of the polymer solid electrolyte may be polyethylene oxide (PEO), polypropylene oxide (PPO), and a copolymer thereof. The polymer solid electrolyte may contain lithium salt to ensure ion conductivity. Examples of the lithium salt can include LiBF₄, LiPF₆, LiN(SO₂CF₃)₂, LiN(SO₇C₂F₅)₂, or a mixture thereof.

Referring to Fig. 3 and Fig. 4, the battery module 10 is housed in a battery case 30. The battery case 30 includes a pair of first case side faces 30a opposite to each other in a T3 axis direction (corresponding to a first direction), a pair of second case side faces 30b opposite to each other in a T1 axis direction (corresponding to a second direction), a case bottom face 30c, and a case top face 30d. In Fig. 3, the case top face 30d is omitted.

A case body consisting of the first case side faces 30a, the second case side faces 30b, and the case bottom face 30c, and the case bottom face 30d may be manufactured as separate components. The case body can be manufactured, for example, through press forming. The case top face 30d can be fixed through welding to inner faces of the first case side faces 30a and the second case faces 30b. The battery case 30 can be formed by using metal.

The battery module 10 is folded at a bend portion 10a. The bend portion 10a is formed at an intermediate portion between the adjacent cells, that is, in an area where the inter-cell connecting tab 12a connecting the adjacent cells is located.

An end of the first cell 11a closer to the case top face 30d is connected to the general positive terminal 21 through the positive electrode terminal connecting tab 12b, and an end of the first cell 11a closer to the case bottom face 30c is connected to the third cell 11c through the inter-cell connecting tab 12a.

An end of the second cell 11b closer to the case top face 30d is connected to the general negative terminal 22 through the negative electrode terminal connecting tab 12c, and an end of the second cell 11b closer to the case bottom face 30c is connected to the fourth cell 11d through the inter-cell connecting tab 12a.

The folded battery module 10 is housed in the battery case 30 in this manner to allow effective use of the space inside the battery case 30. This prevents an increase in size of the battery 1.

The setting of the number of the cells constituting the group of batteries 11 at an even number and the folded battery module 10 housed in the battery case 30 can reduce the distance between the general positive terminal 21 and the portion of the first cell 11a connected to the positive electrode terminal connecting portion 12b. This can reduce the length of the positive electrode terminal connecting portion 12b. Similarly, the distance between the general negative terminal 22 and the portion of the second cell 11b connected to the negative electrode terminal connecting portion 12c can be reduced. This can reduce the length of the negative electrode terminal connecting portion 12c.

A cooling duct 31 is provided at the case bottom face 30c. The cooling duct 31 includes cooling fins 31a and a duct wall portion 31b. The cooling fins 31a are in contact with the case bottom face 30c and are provided at predetermined intervals in a longitudinal direction (T1 axis direction) of the case bottom face 30c. The cooling fins 31a can be formed by using metal having a high thermal conductivity. The metal may be aluminum.

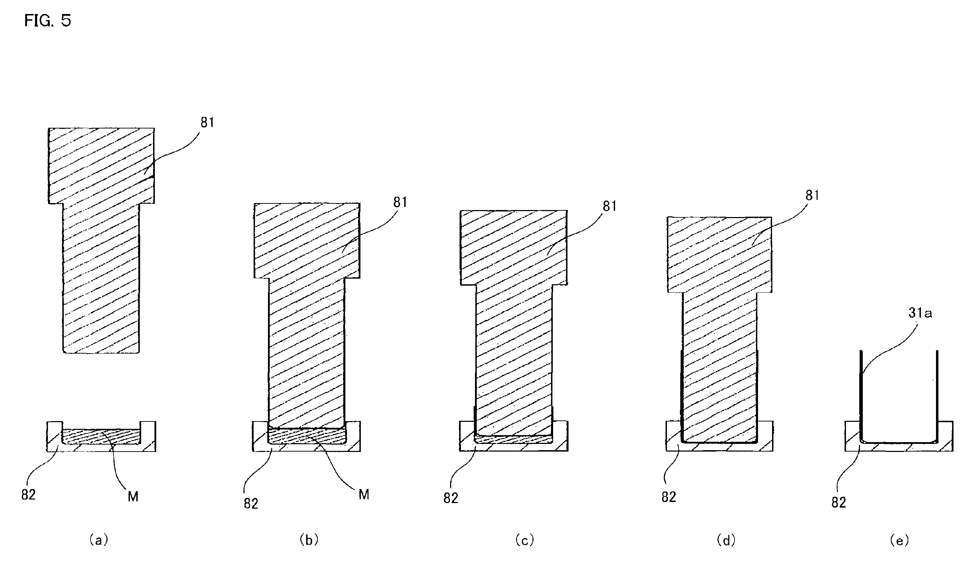

Fig. 5 shows diagrams for explaining the operation of a processing apparatus for producing the cooling fins. The processing proceeds in the order from (a) to (e). An impact molding apparatus can be used as the processing apparatus. The impact processing apparatus includes a punch 81 and a die 82. The punch 81 moves into and out of a recessed portion of the die 82. The punch 81 is driven by a motor, not shown. A slag M serving as a base material of the cooling fins is placed in the recessed portion of the die 82. The slag M may be an ingot of cylindrical form made of aluminum.

When the punch 81 is lowered toward the recessed portion of the die 82, the slag M is crushed, and part of the crushed slag M is squeezed out of a gap between the punch 81 and the die 82 to form the cooling fin 31a. According to the method, the cooling fins 31a can be manufactured simply by lowering the punch 81 toward the die 82. In addition, the cost of a mold can be reduced to prevent an increase in manufacture cost of the battery 1.

The space surrounded by the case bottom face 30c, the cooling fins 31a, and the duct wall portion 31b provides a coolant path for passing a coolant. The coolant passed in the coolant path can cool the case bottom face 30c and the battery module 10. This avoids deterioration of the first to fourth cells 11a to 11d. The coolant may be air or a heat exchange medium in liquid form.

The bend portion 10a may have a temperature higher than that of the remaining portion when the battery module 10 is charged and discharged. Since the inter-cell connecting tab 12a is located at the bend portion 10a, the temperature of generated heat during charge and discharge of the battery module 10 is relatively high. Since the bend portion 10a is in contact with the case bottom face 30c, and the cooling fins 31a are in contact with the case bottom face 30c, the coolant flowing in the cooling duct 31 can efficiently cool the first to fourth cells 11a to 11d.

The internal pressure of the battery case 30 is set to be higher than the external pressure. The higher internal pressure of the battery case 30 may be achieved by supplying an inert gas (for example, nitrogen gas) or air into the battery case 30. The inert gas or the like fed into the battery case 30 provides a pressurized atmosphere in the battery case 30 to press the battery module 10 against the inner face of the battery case 30.

The pressing of the battery module 10 can avoid displacement of the battery module 10. The avoidance of displacement of the battery module 10 can prevent the exterior material 13 of the battery module 10 from rubbing against the inner wall of the battery case 30 and being worn. In addition, the pressing of the battery module 10 can bring the positive electrode component 111a, the negative electrode component 111b, and the separator 111c constituting the power-generating element of the cell into closer contact with each other to prevent deterioration of input/output characteristics of the battery module 10.

A known method of restraining the battery module 10 in the battery case 30 is to attach a restraint member externally to the battery case 30 such that the restraint member presses the battery case. The method, however, requires the attachment of the restraint member to the battery case 30, so that the assembly process is complicated and the cost is increased. According to the battery 1 of the present embodiment, the battery module 10 can be restrained without using the restraint member. As a result, the increase in cost can be prevented while the complication of the assembly process is avoided.

The restraint of the battery module 10 with the internal pressure of the battery case 30 can eliminate the need of a support member for hanging the battery module 10 in the battery case 30. This increases the space in the battery case 30 for placing the battery module 10, so that the battery module 10 can be increased in size while an increased size of the battery 1 is prevented.

When the battery is in an abnormal condition such as overcharge and overdischarge, the first to fourth cells 11a to 11d may discharge gas to increase the internal pressure of the gas exterior material 13. Since the gas exterior material 13 is pressurized from outside by the pressure inside the battery case 30 in the present embodiment, any outflow of the gas from the exterior material 13 can be prevented.

Since the exterior material 13 of the battery module 10 has the insulation properties and the battery case 30 does not have any electric potential, no insulating treatment is required on the inner face of the battery case 30. This can reduce the cost.

A laminated film containing aluminum is widely known as a material for use in hermetically sealing in the cell. The laminated film containing aluminum has water cut-off performance and can prevent entry of moisture into the cell. In the present embodiment, the battery case 30 is made of metal which can prevent entry of moisture into the cell from the outside. Thus, the exterior material 13 in the present embodiment may be provided by using a laminated film which does not contain aluminum. This can enhance the flexibility in selecting the material.

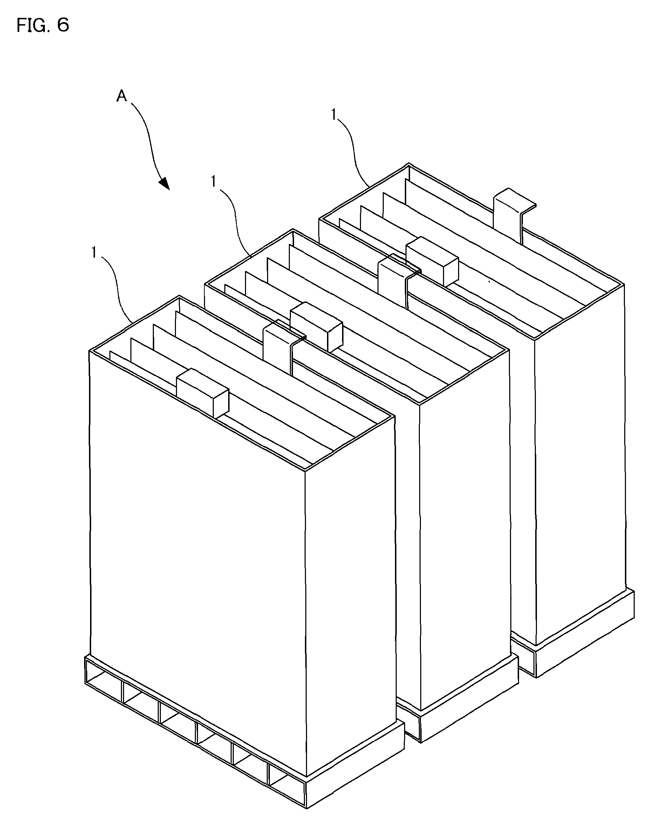

The battery 1 described above can be mounted on a vehicle. The battery 1 supplies power to a motor for running the vehicle. The motor is operated to rotate with the power supplied by the battery 1 to run the vehicle. The vehicle may be an electric car having only the battery 1 as the power source for running the vehicle, or a hybrid car having the battery 1 and another element (for example, an internal-combustion engine or a fuel cell) used in combination as the power source. The hybrid car includes a plug-in hybrid car in which the battery 1 can be charged with a power source provided externally to the vehicle. As shown in Fig. 6, an assembled battery A including a plurality of such batteries 1 connected to each other may be mounted on the vehicle. The assembled battery A supplies power to the motor for running the vehicle to run the vehicle.

### EMBODIMENT 2

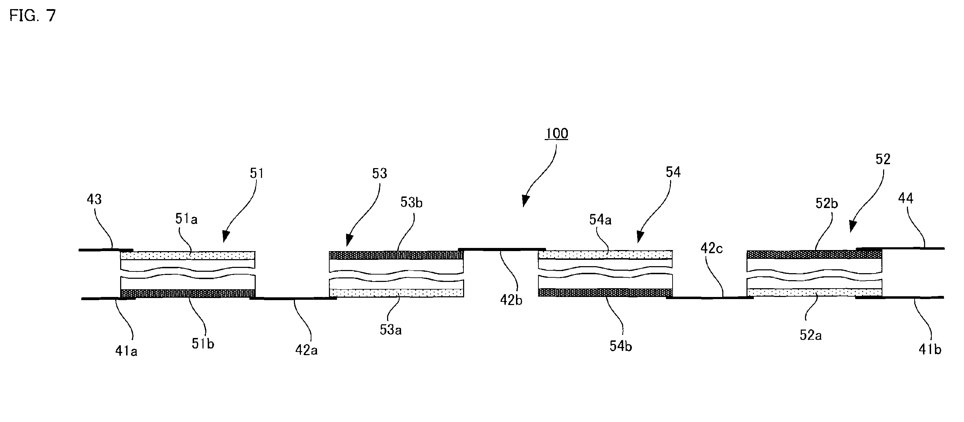

A battery according to Embodiment 2 will hereinafter be described in detail with reference to drawings. Fig. 6 is a developed view of a battery module (corresponding to power-generating portion) 100. Fig. 7 is a section view of the battery and corresponds to Fig. 4. The battery module 100 includes a first cell 51, a second cell 52, a third cell 53, and a fourth cell 54. The first cell 51 is located at one end of the battery module 100, and the second cell 51 is located at the other end of the battery module 100.

The first cell 51 is formed by stacking a positive electrode component 51a and a negative electrode component 51b with a separator interposed between them. Since the positive electrode component 51a and the negative electrode component 51b have the same configurations as those of the positive electrode component 111a and the negative electrode component 111b in Embodiment 1, respectively, detailed description thereof is omitted. Since the second to fourth cells 52 to 54 have the same configuration as that of the first cell 51, detailed description thereof is omitted.

The positive electrode component 51a of the first cell 51 is connected to a positive electrode terminal 57 (corresponding to an extraction electrode) of the battery through a positive electrode terminal connecting tab 43 (corresponding to a first connecting member). The negative electrode component 51b of the first cell 51 is connected to a voltage detecting tab 41a (corresponding to a first voltage detecting portion). The negative electrode component 51b of the first cell 51 and a positive electrode component 53a of the third cell 53 are electrically and mechanically connected to each other through an inter-cell connecting tab 42a (corresponding to a conductive member). A negative electrode component 53b of the third cell 53 and a positive electrode component 54a of the fourth cell 54 are electrically and mechanically connected to each other through an inter-cell connecting tab 42b (corresponding to a conductive member). A negative electrode component 54b of the fourth cell 54 and a positive electrode component 52a of the second cell 52 are electrically and mechanically connected to each other through an inter-cell connecting tab 42c (corresponding to a conductive member). A negative electrode component 52b of the second cell 52 is connected to a negative electrode terminal 58 (extraction electrode) of the battery through a negative electrode terminal connecting tab 44 (corresponding to a second connecting member).

As shown in Fig. 7, the battery module 100 is folded at a boundary portion between adjacent cells and is housed in a battery case 59, similarly to the battery module 10 in Embodiment 1. The inter-cell connecting tab 42b connecting the third cell 53 and the fourth cell 54 is exposed to the outside of an exterior material 13, and a voltage detecting terminal 56 (corresponding to a second voltage detecting portion) is in contact with the exposed portion. The inter-cell connecting tab 42b has elasticity. The inter-cell connecting tab 42b is pressed against the voltage detecting terminal 56 through the elasticity. Alternatively, the inter-cell connecting tab 42b and the voltage detecting terminal 56 may be bonded to each other by welding.

The positive electrode terminal connecting tab 43, the voltage detecting tab 41a, the voltage detecting terminal 56, the negative electrode terminal connecting tab 44, and the voltage detecting tab 41b are electrically connected to a monitor unit, not shown. The monitor unit transmits voltage information acquired from the positive electrode terminal connecting tab 43, the voltage detecting tab 41a, the voltage detecting terminal 56, the negative electrode terminal connecting tab 44, and the voltage detecting tab 41b to an ECU (Electric Control Unit), not shown. The ECU calculates the voltage of the first cell 51 based on the voltage information acquired through the positive electrode terminal connecting tab 43 and the voltage detecting tab 41a. The ECU calculates the voltage of the third cell 53 based on the voltage information acquired through the voltage detecting tab 41a and the voltage detecting terminal 56. The ECU calculates the voltage of the fourth cell 54 based on the voltage information acquired through the voltage detecting terminal 56 and the voltage detecting tab 41b. The ECU calculates the voltage of the second cell 52 based on the voltage information acquired through the negative electrode terminal connecting tab 44 and the voltage detecting tab 41b.

According to the configuration described above, the voltages of the cells 51 to 54 can be detected without providing the voltage detecting tab for the respective adjacent cells. This can reduce the cost of the battery.

When the number of the cells is an even number as shown in Fig. 7, the positive electrode terminal connecting tab 43, the voltage detecting tab 41a, the voltage detecting terminal 56, the negative electrode terminal connecting tab 44, and the voltage detecting tab 41b can be collectively provided at one end side of the battery case 59. The arrangement can integrate the voltage detection paths into a bus bar module. The bus bar module refers to a unit of a plurality of bus bars used in an assembled battery including a plurality of batteries in which each of the bus bars connects the adjacent batteries. The bus bar module is used to facilitate the installation of the bus bars.

### MODIFICACTION 1

Although the positive electrode component 111a, the negative electrode component 111b, and the separator 111c are stacked in the predetermined direction to constitute the cell in the embodiments described above, the present invention is not limited thereto. For example, the positive electrode component 111a and the negative electrode component 111b may be stacked with the separator 111c interposed between them to provide a stack sheet, and the stack sheet may be wound around a predetermined axis to form a winding which constitutes the cell.

### MODIFICATION 2

Although the cooling duct 31 is disposed along the case bottom face 30c of the battery case 30 in the embodiments described above, the present invention is not limited thereto, and the cooling duct 31 may be provided at a different position. The different position may be at the case side face 30b of the battery case 30. In another modification, the cooling duct 31 may be omitted.

### MODIFICATION 3

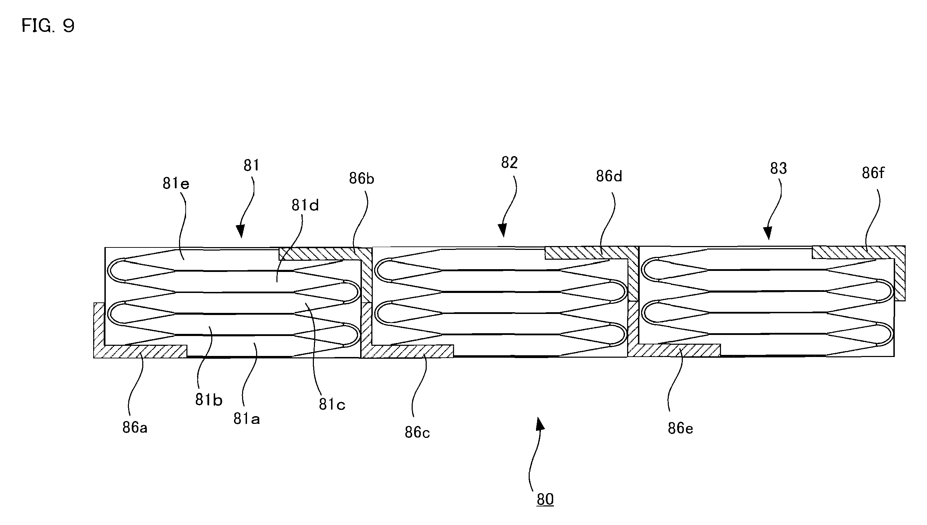

Although the number of the cells included in the battery is an even number in the embodiments described above, the present invention is not limited thereto, and the number may be an odd number. Fig. 9 is an assembly drawing of an assembled battery including batteries connected in serial in which each of the batteries includes an odd number (for example, five) of cells. An assembled battery 80 includes a first battery 81, a second battery 82, and a third battery 83. The first battery 81 includes first to fifth cells 81a to 81e. Since the second to third batteries 82 to 83 have the same configuration as that of the first battery 81, detailed description thereof is omitted.

A positive electrode terminal 86a and a negative electrode terminal 86b of the first battery 81 are formed on different faces. In this case, as shown, the negative electrode terminal 86b of the first battery 81 and a positive electrode terminal 86c of the second battery 82 can be extended along outer faces of the first and second batteries 81 and 82 to electrically connect the first battery 81 to the second battery 82. Similarly, a negative electrode terminal 86d of the second battery 82 and a positive electrode terminal 86e of the third battery 83 can be extended along outer faces of the second and third batteries 82 and 83 to electrically connect the second battery 82 to the third battery 83. The number of the batteries included in the assembled battery can be set as appropriate in view of the yields of materials, processing equipment, mount space and the like.

### MODIFICATION 4

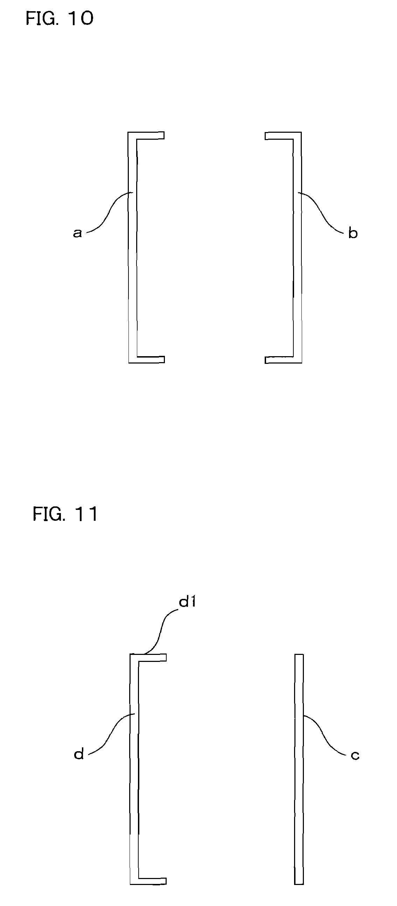

Although the battery case 30 is formed of the case body consisting of the first case side faces 30a, the second case side faces 30b, and the case bottom face 30c, and the case top face 30d in the embodiments described above, the present invention is not limited thereto. As shown in Fig. 10, the battery case 30 may be provided by bonding a case a and a case b of bottomed tubular form at their end portions. In this case, the battery module 10 (100) housed in the battery case 30 is pressed by the inner faces of the cases. The case a and the case b having the common shape can reduce the cost of the battery. In addition, as shown in Fig. 11, the battery case 30 may be provided by bonding a side wall c of flat plate shape and a case d of bottomed tubular shape at their end portions. In this case, the battery module 10 (100) housed in the battery case 30 is pressed by the inner faces of the cases. The parts such as the positive electrode terminal can be collectively placed at an upper wall portion d1 of the case d.

### MODIFICATION 5

The positive electrode terminal connecting tab 12b (negative electrode terminal connecting tab 12c) connected to the general positive terminal 21 (general negative terminal 22) may sag. This provides so-called play in the positive electrode terminal connecting tab 12b (negative electrode terminal connecting tab 12c) to reduce a load on the positive electrode terminal connecting tab 12b (negative electrode terminal connecting tab 12c) during vibration of the battery.

### DESCRIPTION OF THE REFERENCE NUMERALS

1 BATTERY 10 BATTERY MODULE 11 GROUP OF BATTERIES
11A TO 11D FIRST TO FOURTH CELLS 12A INTER-CELL CONNECTING TAB
12B POSITIVE ELECTRODE TERMINAL CONNECTING TAB 12C NEGATIVE ELECTRODE TERMINAL CONNECTING TAB
30 BATTERY CASE 31 COOLING DUCT

## Claims

1. A battery comprising:
a power-generating portion provided by covering cells with an insulating external material; and
a case having a hermetically sealing structure to house the power-generating portion,
wherein the case has an internal pressure higher than an external pressure.

2. The battery according to claim 1, wherein the power-generating portion is a battery module provided by covering a group of batteries with the external material, the group of batteries including the arranged cells, and
the battery module is housed in the case such that the battery module is folded at an area where a conductive member connecting adjacent ones of the cells is located.

3. The battery according to claim 2, further comprising a coolant passage in which a coolant is passed along a face of the case closest to the conductive member.

4. The battery according to claim 2 or 3, wherein the case includes first side faces opposite to each other in a first direction, second side faces opposite to each other in a second direction orthogonal to the first direction, a bottom face, and a top face,
a pair of extraction electrodes used to extract a power of the battery module to the outside of the case is provided closer to the top face,
the number of the cells included in the group of batteries is an even number, and
the group of batteries includes a first cell and a second cell, an end portion of the first cell closer to the top face being connected to one of the pair of extraction electrodes through a first connecting member, an end portion of the first cell closer to the bottom face being connected to the conductive member, an end portion of the second cell closer to the top face being connected to the other of the pair of extraction electrodes through a second connecting member, an end portion of the second cell closer to the bottom face being connected to the conductive member.

5. The battery according to claim 4, wherein the group of batteries further includes a third cell connected to the first cell through the conductive member and a fourth cell connected to the third cell through the conductive member,
the first connecting member is connected to one of a positive electrode and a negative electrode of the first cell, and
the conductive member is exposed to the outside of the external material,
the battery further comprising:
a first voltage detecting portion connected to the other of the electrodes of the first cell, and
a second voltage detecting portion connected to the exposed portion of the conductive member connecting the third cell and the fourth cell.

6. The battery according to claim 5, wherein the first voltage detecting portion is connected to the end portion of the first cell closer to the top face.

7. An assembled battery comprising the batteries according to any one of claims 4 to 6, wherein the pair of extraction electrodes for the cells are arranged along the first direction.

8. A vehicle comprising:
the battery according to any one of claims 1 to 6; and
a motor driven to rotate with a power supplied from the battery to generate an energy for running the vehicle.

9. A vehicle comprising:
the assembled battery according to claim 7; and
a motor driven to rotate with a power supplied from the assembled battery to generate an energy for running the vehicle.
